# EUROPÄISCHE PATENTSCHRIFT

(11) **EP 1 385 730 B1**
(45) Veröffentlichungstag und Bekanntmachung des Hinweises auf die Patenterteilung: **13.10.2004**
(21) Anmeldenummer: 02748678.6
(22) Anmeldetag: 26.04.2002
(51) Int. Cl.: B60T 13/68, B60T 15/18

(54) **VORGESTEUERTES VENTIL MIT EINER VENTILSITZANORDNUNG**
PILOT VALVE COMPRISING A VALVE SEAT ARRANGEMENT
SOUPAPE COMPORTANT UNE SOUPAPE PILOTE ET UN ENSEMBLE SIEGE DE SOUPAPE

(30) Priorität: 26.04.2001 DE 10120322
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004632
(87) Internationale Veröffentlichungsnummer: WO 2002/102636

(56) Entgegenhaltungen:
- DE-A- 19 605 562
- FR-A- 2 705 741
- US-A- 5 154 203

## Beschreibung

Die Erfindung betrifft ein vorgesteuertes Ventil, insbesondere ein elektropneumatisches Regelventil für ein Druckluftbremssystem eines Fahrzeuges, mit einem einen axial verstellbaren Steuerkolben enthaltenden Ventilgehäuse, der zur Axialverstellung über mindestens ein elektromagnetisches Vorsteuerventil beaufschlagbar ist, und der zur Betätigung einer den Druckluftfluss zwischen mindestens einem außenliegenden Bremsleitungsanschluss, einem Speisedruckanschluss sowie einem Entlüftungsanschluss schaltenden Ventilsitzanordnung vorgesehen ist, die im Wesentlichen aus einer topfartigen Dichtmanschette mit koaxialem Durchbruch besteht, deren kreisringförmige Dichtfläche mit einer aus einem äußeren Ventilsitz und einem inneren Ventilsitz gebildeten koaxialen Ventilsitzanordnung korrespondiert. Insbesondere betrifft die vorliegende Erfindung eine spezielle Ausgestaltung der Dichtmanschette.

Ein gattungsgemäßes vorgesteuertes Ventil wird beispielsweise als elektropneumatisches Regelventil innerhalb eines Druckluftbremssystems eines Nutzfahrzeuges eingesetzt, um einen Bremsdruck entsprechend der gewünschten Bremswirkung auszuregeln. Eine vom Regelventil ausgehende Bremsleitung steht zu diesem Zwecke gewöhnlich mit einem Bremszylinder in Verbindung, der am Fahrzeugrad angeordnet ist und die zum Bremsen benötigte Bremskraft für eine hieran angeschlossene Scheiben- oder Trommelbremse erzeugt. Die Vorgabe des Druck-Sollwertes für das elektropneumatische Regelventil kann sowohl elektrisch als auch pneumatisch erfolgen. Die pneumatische Ansteuerung wird meist jedoch nur zur Sicherheit im Falle eines Ausfalls der elektrischen Ansteuerung genutzt.

Ein derartiges elektropneumatisches Regelventil ist aus der DE 196 05 562 A1 bekannt. Das Regelventil weist einen innerhalb eines Ventilgehäuses untergebrachten großflächigen Steuerkolben auf, der über eine korrespondierende Steuerkammer axial bewegbar ist. Gegenüberliegend der Steuerkammer grenzt der Steuerkolben an eine Arbeitskammer. Seitens der Arbeitskammer ist ein koaxialer Hohlzapfen am Steuerkolben ausgebildet, der zur Betätigung einer benachbarten Ventilsitzanordnung dient. Die Ventilsitzanordnung schaltet durch eine axiale Verstellung einer federverspannten Dichtmanschette den Druckluftfluss zwischen einem außenliegenden Bremsleitungsanschluss, einem Speisedruckanschluss sowie einem Entlüftungsanschluss.

Über eine Vorsteuerventilanordnung ist der Steuerkolben mit einem Steuerdruck seitens der Steuerkammer beaufschlagbar. Die Vorsteuetventilanordnung besteht hier aus zwei elektromagnetischen Vorsteuerventilen, die durch eine koordinierte Bestromung der integrierten elektrischen Spulen ein Ansteigen, Halten oder Absenken des Steuerdrucks innerhalb der Steuerkammer bewirken. Auf der dem Steuerkolben gegenüberliegenden Seite wirkt eine aus dem Bremsdruck resultierende Gegenkraft.

Die vom Steuerkolben derart betätigbare Ventilsitzanordnung umfasst die topfartig ausgebildete Dichtmanschette, welche mit einem koaxialen Durchbruch versehen ist, um hierdurch die bei der Entlüftung der Steuerkammer anfallende Abluft an den Entlüftungsanschluss zu leiten. Die verbleibende kreisringförmige Dichtfläche der Dichtmanschette bildet gemeinsam mit einem gegenüberliegenden äußeren Ventilsitz, der einen koaxialen inneren Ventilsitz umschließt, eine korrespondierende Ventilsitzanordnung.

Eine Druckluftbeaufschlagung des mit der Arbeitskammer in Verbindung stehenden Bremsleitungsanschlusses erfolgt durch Niederdrücken der Dichtmanschette, wobei diese vom äußeren Ventilsitz abhebt, so dass ein Druckluftfluss vom Speisedruckanschluss zur Arbeitskammer freigegeben wird. Eine Entlüftung der mit dem Bremsleitungsanschluss in Verbindung stehenden Arbeitskammer wird durch ein Abheben des einstückig mit dem Steuerkolben ausgebildeten inneren Ventilsitzes erreicht, wobei ein Druckluftfluss ausgehend von der Arbeitskammer zum Entlüftungsanschluss erfolgt.

Die mit der vorstehend beschriebenen bekannten Ventilsitzanordnung erreichbare Regelqualität ist dadurch begrenzt, dass eine relativ große Kraftkomponente von unten her auf die Dichtmanschette in Richtung des Steuerkolbens wirkt, welche im Wesentlichen durch die Einflüsse des Bremsdrucks verursacht wird. Dieser unteren Kraftkomponente steht zur anderen Seite der Dichtmanschette eine obere Kraftkomponente gegenüber, die aufgrund einer kleineren wirksamen Fläche - verursacht durch die koaxiale Anordnung der beiden Ventilsitze - in Verbindung mit dem Druck in der Arbeitskammer bei der abgeschlossenen Ventilstellung einen kleineren Betrag aufweist. Dieses Ungleichgewicht der beiden Kraftkomponenten führt zu einer relativ großen Hysterese der Ventilsitzanordnung, was die Regelqualität negativ beeinflusst.

Es ist bereits versucht worden, die wirksame kreisringförmige Dichtfläche der Dichtmanschette zu vergrößern, indem der Kolbensitzdurchmesser weiter verkleinert wird. Hierbei hat sich jedoch herausgestellt, dass die Dichtmanschette im inneren Randbereich derart ungünstig beansprucht wird, dass eine zuverlässige Dichtheit und exakte Ventilfunktion nicht erzielbar ist. Eine Vergrößerung des äußeren Ventilsitzes kommt wegen baulich bedingter Restriktionen nicht in Betracht.

Die Dichtmanschette besteht aus einem Elastomer und weist eine Verstärkungseinlage auf, die randquerschnittsmäßig im Wesentlichen rechtwinklig ausgebildet ist, wobei der waagerechte, unterhalb der Dichtfläche verlaufende Schenkel sich an einen senkrechten, entlang eines außenliegenden Dichtlippenabschnittes erstreckenden Schenkels anschließt, um insoweit die Außenflanke der Dichtmanschette zu verstärken. Mit dieser Geometrie ist eine Vergrößerung der Kraftkomponente oberhalb der Dichtmanschette bei den vorstehend angegebenen Randbedingungen nicht erreichbar. Im Extremfall kann es durch Einwirkung des inneren Ventilsitzes zu einem Abscheren von Dichtungsmaterial an der Dichtmanschette kommen.

Es ist daher die Aufgabe der vorliegenden Erfindung, ein gattungsgemäßes vorgesteuertes Ventil dahingehend weiterzuverbessern, dass die im Zusammenhang mit der Ventilsitzanordnung zum Einsatz kommende Dichtmanschette eine Verkleinerung des inneren Ventilsitzdurchmessers zur Vergrößerung der Kraftkomponente oberhalb der Dichtmanschette ermöglicht und gleichzeitig eine zuverlässige Dichtfunktion im Dauerbetrieb sicherstellt.

Die Erfindung wird ausgehend von einem vorgesteuerten Ventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine Dichtmanschette eine randquerschnittsmäßig im Wesentlichen U-förmig ausgebildete innenliegende Verstärkungseinlage aufweist, die mit einem radial nach innen gerichteten und den innenradialen Bereich der Dichtfläche verstärkenden angeformten Ansatz versehen ist, wobei die beiden Schenkel der Verstärkungseinlage in zugeordnete Dichtlippenabschnitte der Dichtmanschette verstärkend hineinragen.

Der Vorteil einer derartig ausgebildeten Dichtmanschette liegt darin, dass der kritische, mit dem inneren Ventilsitz korrespondierende Bereich der Dichtfläche durch eine speziell unterstützend ausgestaltete Geometrie der Verstärkungseinlage derartig gestützt wird, dass der Ventilsitzdurchmesser weiter reduziert werden kann, um insoweit die wirksame Ringfläche oberhalb der Dichtmanschette zu vergrößern, ohne die axiale Beweglichkeit der Dichtmanschette zu behindern. Infolgedessen wird eine kleinere Ventilhysterese erreicht, was zu einer besseren Regelqualität eines elektropneumatischen Regelventils führt.

Vorzugsweise besteht die Verstärkungseinlage aus einem - gegenüber dem umgebenen elastomeren Dichtmaterial der Dichtmanschette - relativ starren Kunststoff, der in die Dichtmanschette einvulkanisiert ist. Daneben ist es auch denkbar, eine Verstärkungseinlage aus Stahl, Aluminium oder dergleichen zu verwenden.

Gemäß einer die Erfindung verbessernden Maßnahme sind die beiden von der Dichtlippenmanschette ausgehenden ringförmigen Dichtlippenabschnitte in etwa gleichlang ausgebildet, um im Zusammenwirken mit den ebenfalls gleichlang ausgebildeten Schenkeln der Verstärkungseinlage eine gleichmäßige Qualität der Dichtung zu gewährleisten, ohne dass unterschiedlich hohe Anlagekräfte an den zur Dichtmanschette korrespondierenden Gehäusebestandteilen zu einer Behinderung der axialen Bewegbarkeit der Dichtmanschette führt.

Gemäß einer weiteren, die Erfindung verbessernden Maßnahme kann durch den Durchbruch in der Dichtmanschette hindurch ein Rohrabschnitt mit einem Entlüftungskanal hindurchgeführt werden, um die bei der Entlüftung der Steuerkammer anfallende Abluft direkt in den Bereich des Entlüftungsanschlusses zu leiten. Dementsprechend ist der Durchmesser des Durchbruchs auf den Durchmesser des Rohrabschnitts derart abgestimmt, dass ein noch ausreichender kreisringförmiger Strömungsquerschnitt zur Entlüftung der Arbeitskammer zur Verfügung steht.

Weitere, die Erfindung verbessernde Maßnahmen werden gemeinsam mit der Beschreibung eines bevorzugten Ausführungsbeispiels der Erfindung anhand der Figuren näher dargestellt. Es zeigt:
- Figur 1: einen Längsschnitt durch ein elektropneumatisches Regelventil mit einer erfindungsgemäß ausgebildeten Dichtmanschette,
- Figur 2: einen detaillierten Längsschnitt im Bereich der Ventilsitzanordnung von Figur 1, und
- Figur 3: einen gesonderten Längsschnitt durch die Dichtmanschette.

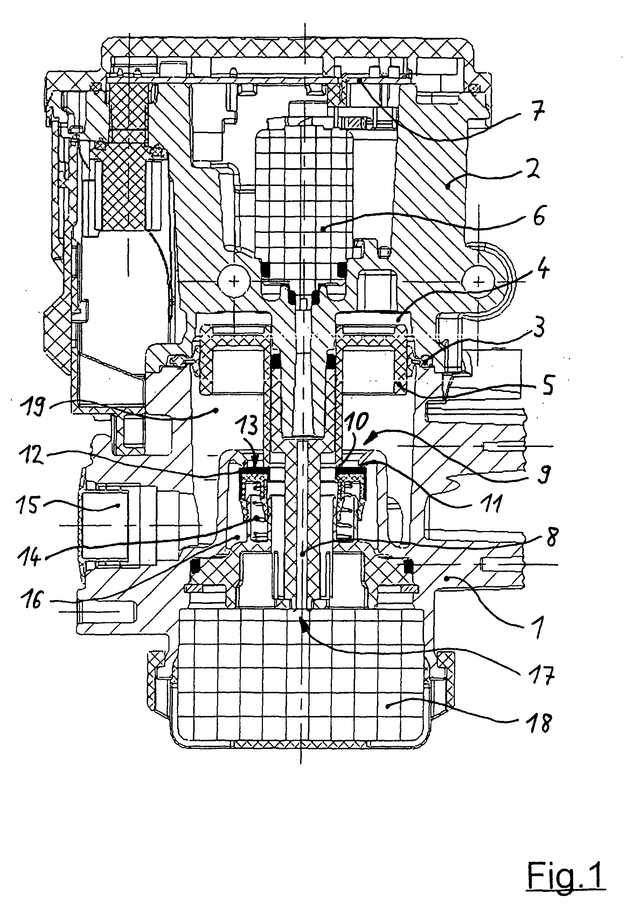

Das elektropneumatische Regelventil gemäß Figur 1 weist ein zweigeteiltes Gehäuse auf, das aus einem unteren Relaisventilgehäuse 1 besteht, welches mit einem oberen Vorsteuerventilgehäuse 2 über ein dazwischenliegendes Dichtelement 3 mittels einer Verschraubung verbunden ist. Das Relaisventilgehäuse 1 und das Vorsteuerventilgehäuse 2 schließen einen als Steuerkammer 4 ausgebildeten innenliegenden Hohlraum ein, in dem ein Steuerkolben 5 axial bewegbar angeordnet ist. Zur axialen Verstellung des Steuerkolbens 5 dient eine im Vorsteuerventilgehäuse 2 untergebrachte Vorsteuerventilanordnung, von der hier lediglich ein als Auslassmagnet dienendes Vorsteuerventil 6 gezeigt ist. Die Vorsteuerventilanordnung wird über eine ebenfalls im Vorsteuerventilgehäuse 2 angeordnete Elektronikeinheit 7 elektrisch angesteuert.

Das gezeigte Vorsteuerventil 6 entlüftet bei Betätigung die Steuerkammer 4, wobei die anfallende Abluft über einen koaxialen Entlüftungskanal 8 an die Atmosphäre abgeleitet wird. Neben dem als Auslassventil dienenden Vorsteuerventil 6 ist ein (hier nicht gezeigtes) zweites Vorsteuerventil als Einlassventil vorhanden, das für eine Beaufschlagung der Steuerkammer 4 mit einem Steuerdruck dient, um den Steuerkolben 5 axial zu verstellen.

Infolge der Beaufschlagung der Steuerkammer 4 betätigt der Steuerkolben 5 über eine untere hülsenartige koaxiale Anformung eine Ventilsitzanordnung 9. Das distale Ende der koaxialen Anformung ist als innerer Ventilsitz 10 ausgebildet. Neben dem inneren Ventilsitz 10 ist ein koaxial in derselben Ebene angeordneter äußerer Ventilsitz 11 vorgesehen, der ortsfest gegenüber dem Relaisventilgehäuse 1 angeordnet ist. Beide Ventilsitze 10 und 11 wirken mit einer topfartigen Dichtmanschette 12 zusammen, deren Dichtfläche 13 an den beiden Ventilsitzen 10 und 11 in einer abgeschlossenen Schaltposition des Regelventils zur Anlage kommt, was unter anderem durch die Wirkung einer zwischen dem Relaisventilgehäuse 1 und der Dichtmanschette 12 angeordneten Druckfeder 14 erfolgt. Über diese Ventilsitzanordnung 9 ist der Druckluftfluss zwischen einem am Relaisventilgehäuse 1 angeordneten Bremsleitungsanschluss 15 einerseits sowie einem (hier nicht erkennbaren) Speisedruckanschluss, der mit einer internen Speisedruckkammer 16 in Verbindung steht, und einem Entlüftungsanschluss 17 andererseits schaltbar. Der Entlüftungsanschluss 17 ist zusätzlich mit einem Schalldämpfer 18 zur Geräuschminderung der aus einer mit dem Bremsleitungsanschluss 15 verbindbaren Arbeitskammer 19 sowie der aus dem Entlüftungskanal 8 ausströmenden Abluft versehen.

Das elektropneumatische Regelventil ist hier in seiner abgeschlossenen Schaltstellung gezeigt. Bei Beaufschlagung der Steuerkammer 4 mit einem Steuerdruck und darauffolgender Bewegung des Steuerkolbens 5 in Richtung einer unteren Position erfolgt durch Öffnen des äußeren Ventilsitzes 11 ein Druckluftfluss, ausgehend von der Speisedruckkammer 16 über die Arbeitskammer 19 zum Bremsleitungsanschluss 15, um insoweit den Bremsdruck zu erhöhen.

Bei einer Entlüftung der Steuerkammer 4 wird der Steuerkolben 5 in eine obere Position überführt, wobei der innere Ventilsitz 10 geöffnet wird, so dass ausgehend vom Bremsleitungsanschluss 15 Druckluft über die Arbeitskammer 19 zum Entlüftungsanschluss 17 gelangt, um den Bremsdruck entsprechend abzusenken. Somit wird der Bremsdruck hier durch eine wechselseitige Bewegung des Steuerkolbens 5 beeinflusst.

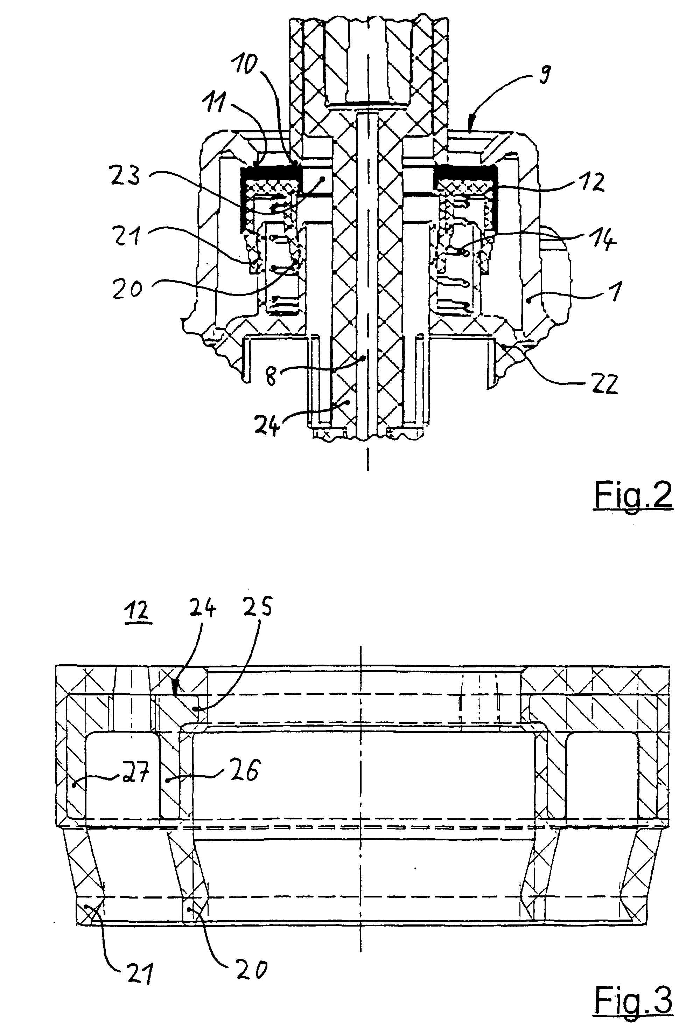

Wie aus der Detaildarstellung gemäß Figur 2 hervorgeht, weist die Dichtmanschette 12 der Ventilsitzanordnung 9 einen innenradialen Dichtlippenabschnitt 20 sowie einen außenradialen Dichtlippenabschnitt 21 auf, die dichtend an rohrförmigen Abschnitten einer ortsfest gegenüber dem Retaisventitgehäuse 1 angeordneten Einsatzhülse 22 zur Anlage kommen und die Feder 14 einschließen. Durch einen Durchbruch 23 in der Dichtmanschette 12 verläuft ein den Entlüftungskanal 8 enthaltener Rohrabschnitt 24, um die bei der Entlüftung der (hier nicht dargestellten) Steuerkammer anfallende Abluft in den Bereich des Entlüftungsanschlusses zu leiten.

Gemäß Figur 3 besitzt die Dichtmanschette 12 eine randquerschnittsmäßig im Wesentlichen U-förmig ausgebildete innenliegende ringförmige Verstärkungseinlage 24. Die Verstärkungseinlage 24 besteht hier aus einem gegenüber des elastomeren Dichtmaterials der Dichtmanschette 12 relativ starren Kunststoff und ist durch Einvulkanisieren in die Dichtmanschette 12 eingebracht. Die Verstärkungseinlage 24 ist mit einem radial nach innen gerichteten Ansatz 25 versehen, um den innenradialen Bereich der Dichtfläche 13 zusätzlich zu verstärken. Zwei Schenkel 26 und 27 der Verstärkungseinlage 24 ragen je in die beiden Dichtlippenabschnitte 20 und 21 hinein, um die Stabilitätseigenschaften der Dichtmanschette 12 zu erhöhen und insoweit die Dichtungseigenschaften zu verbessern. Die beiden Dichtlippenabschnitte 20, 21 der Dichtlippenmanschette 12 sind hier gleichlang ausgebildet und wirken mit ebenfalls gleichlangen, jedoch kürzeren Schenkeln 26, 27 der innenliegenden Verstärkungseinlage 24 zusammen.

Die Erfindung ist nicht beschränkt auf das vorstehend angegebene, bevorzugte Ausführungsbeispiel. Es sind vielmehr auch Abwandlungen hiervon denkbar, die vom Schutzbereich der nachfolgenden Ansprüche mit erfasst sind. So können beispielsweise die Längen- und Durchmesserverhältnisse der Dichtmanschette im Rahmen des Schutzbereiches variieren.

### Bezugszeichenliste

- 1: Relaisventilgehäuse
- 2: Vorsteuerventilgehäuse
- 3: Dichtelement
- 4: Steuerkammer
- 5: Steuerkolben
- 6: Vorsteuerventil
- 7: Elektronikeinheit
- 8: Entlüftungskanal
- 9: Ventilsitzanordnung
- 10: innerer Ventilsitz
- 11: äußerer Ventilsitz
- 12: Dichtmanschette
- 13: Dichtfläche
- 14: Feder
- 15: Bremsleitungsanschluss
- 16: Speisedruckanschluss
- 17: Entlüftungsanschluss
- 18: Schalldämpfer
- 19: Arbeitskammer
- 20, 21: Dichtlippenabschnitt
- 22: Einsatzhülse
- 23: Durchbruch
- 24: Verstärkungseinlage
- 25: Ansatz
- 26, 27: Schenkel

## Patentansprüche

1. Vorgesteuertes Ventil, insbesondere elektropneumatisches Regelventil für ein Druckluftbremssystem eines Fahrzeuges, mit einem einen axial verstellbaren Steuerkolben (5) enthaltenden Ventilgehäuse (1), der zur Axialverstellung über mindestens ein elektromagnetisches Vorsteuerventil (6) beaufschlagbar ist, und der zur Betätigung einer den Druckluftfluss zwischen zumindest einem außenliegenden Bremsleitungsanschluss (15), einem Speisedruckanschluss sowie einem Entlüftungsanschluss (17) schaltenden Ventilsitzanordnung (9) vorgesehen ist, die im wesentlichen aus einer topfartigen Dichtmanschette (12) mit koaxialem Durchbruch (23) besteht, deren kreisringförmige Dichtfläche (13) mit einer aus einem äußeren Ventilsitz (11) und einem inneren Ventilsitz (10) gebildeten koaxialen Ventilsitzanordnung korrespondiert, **dadurch gekennzeichnet, dass** die Dichtmanschette (12) eine randquerschnittsmäßig im wesentlichen U-förmig ausgebildete innenliegende Verstärkungseinlage (24) aufweist, die mit einem radial nach innen gerichteten und den innenradialen Bereich der Dichtfläche (13) verstärkenden angeformten Ansatz (25) versehen ist, wobei die beiden Schenkel (26, 27) der Verstärkungseinlage (24) in zugeordnete Dichtlippenabschnitte (20, 21) der Dichtmanschette (12) verstärkend hineinragen.

2. Vorgesteuertes Ventil nach Anspruch 1,
**dadurch gekennzeichnet, dass** die Verstärkungseinlage (24) aus einem gegenüber des elastomeren Dichtmaterials der Dichtmanschette (12) relativ starren Kunststoff besteht, der in die Dichtmanschette (12) einvulkanisierbar ist.

3. Vorgesteuertes Ventil nach Anspruch 1,
**dadurch gekennzeichnet, dass** die Verstärkungseinlage aus Stahl oder Aluminium besteht.

4. Vorgesteuertes Ventil nach Anspruch 1,
**dadurch gekennzeichnet, dass** die beiden Dichtlippenabschnitte (21, 22) der Dichtlippenmanschette (12) in etwa gleichlang ausgebildet sind und mit ebenfalls gleichlangen, jedoch kürzeren Schenkeln (26, 27) der innenliegenden Verstärkungseinlage (24) zusammenwirken.

5. Vorgesteuertes Ventil nach einem der vorstehenden Ansprüche,
**dadurch gekennzeichnet, dass** durch den Durchbruch (23) in der Dichtmanschette (12) ein Rohrabschnitt (24) mit einem Entlüftungskanal (8) verläuft, um die bei der Entlüftung der Steuerkammer (4) anfallende Abluft direkt in den Bereich des Entlüftungsanschlusses (17) zu leiten.

## Claims

1. Pilot-controlled valve, in particular an electro-pneumatic regulating valve, for a compressed-air brake system in a vehicle, comprising a valve body (1) including an axially adjustable control plunger (5) adapted to be acted upon for axial adjustment via at least one electromagnetic pilot control valve (6) and provided for actuating a valve seat means (9) switching the flow of compressed air between at least one outside brake pipe connector (15), a supply pressure connector as well as a venting connector (17), which valve seat means consist essentially of a pot-like sealing cuff (12) with a coaxial passage (23) whose annular sealing surface (13) is in correspondence with a coaxial valve seat means constituted by an outer valve seat (11) and an inner valve seat (10), **characterised in that** said sealing cuff (12) comprises an inside reinforcing insert (24) of substantially U-shaped configuration in terms of the edge cross-section, which is provided with a radially inwardly oriented integrally formed projection (25) that reinforces the inner radial region of said sealing surface (13), with the two branches (26,27) of said reinforcing insert (24) projecting into associated sealing-lip sections (20, 21) of said sealing cuff (12) for reinforcement.

2. Pilot-controlled valve according to Claim 1,
**characterised in that** said reinforcing insert (24) consists of a synthetic material of relative rigidity, compared against the elastomer sealing material of said sealing cuff (12), which is adapted to be vulcanised into said sealing cuff (12).

3. Pilot-controlled valve according to Claim 1,
**characterised in that** said reinforcing insert consists of steel or aluminium.

4. Pilot-controlled valve according to Claim 1,
**characterised in that** said two sealing-lip sections (21, 22) of said sealing lip cuff (12) present approximately the same length and cooperate with branches (26, 27) of said inner reinforcing insert (24), which are equally of the same length but shorter.

5. Pilot-controlled valve according to any of the preceding Claims,
**characterised in that** a pipe section (24) with a venting passage (8) extends through said passage (23) in said sealing cuff (12) for passing the discharge air produced when the control chamber (4) is vented into the zone of said venting connector (17) directly.

## Revendications

1. Soupape sous commande pilote, en particulier une soupape de régulation électropneumatique, pour un système de frein à air comprimé dans un véhicule, comprenant un corps de soupape (1) renfermant un piston de commande (5) ajustable en sens axial et apte à être commandé pour l'ajustement axial via au moins une soupape pilote électromagnétique de commande et disposé à commander un moyen à siège de soupape (9) à commuter le courant de l'air comprimé entre au moins un raccord (15) de conduit de freinage extérieur, un raccord d'alimentation de pression, ainsi qu'un raccord d'aération (17), lequel moyen à siège de soupape consiste essentiellement en un manchon d'étanchéité du type d'un pot à un passage coaxial (23), dont la surface annulaire d'étanchéité (13) se trouve en correspondance avec un moyen à siège coaxiale de soupape constituée par une siège extérieure de soupape (11) et une siège intérieure de soupape (10), **caractérisé en ce que** ledit manchon d'étanchéité (12) comprend un insert renforçant (24) intérieur configuré essentiellement en U en ce qui concerne la section transversale au bord, qui est muni d'un bout (25) formé de façon intégrale et orienté vers l'intérieur en sens radial, qui renforce la zone radiale intérieure de ladite surface d'étanchéité (13), à deux bras (26,27) dudit insert renforçant (24), qui fait saillie dans des parties affectées de lièvre d'étanchéité (20, 21) dudit manchon d'étanchéité (12) pour son renforcement.

2. Soupape sous commande pilote selon la revendication 1,
**caractérisé en ce que** ledit insert renforçant (24) consiste en un matériau synthétique à rigidité relative, devant le matériau élastomère d'étanchéité dudit manchon d'étanchéité (12), qui est apte à être vulcanisé dans ledit manchon d'étanchéité (12).

3. Soupape sous commande pilote selon la revendication 1,
**caractérisé en ce que** ledit insert renforçant consiste en acier ou aluminium.

4. Soupape sous commande pilote selon la revendication 1,
**caractérisé en ce que** les deux parties (21, 22) à lièvre d'étanchéité dudit manchon à lièvre d'étanchéité (12) présentent la même longueur environ et coopèrent avec des bras (26, 27) dudit insert renforçant (24) intérieur, qui ont également la même longueur mais sont plus courts.

5. Soupape sous commande pilote selon une quelconque des revendications précédentes,
**caractérisé en ce qu'**une partie de tube (24) à un passage d'aération (8) s'étend à travers ledit passage (23) dans ledit manchon d'étanchéité (12) pour passer l'air à décharger, qui est produit quand la chambre de commande (4) est aérée, directement dans la zone dudit raccord d'aération (17).
